(19)

Europäisches Patentamt

European Patent Office

Office européen des brevets

(11)  **EP 4 188 039 B1**

(12)  **EUROPEAN PATENT SPECIFICATION**

(45) Date of publication and mention
of the grant of the patent:
**29.01.2025  Bulletin 2025/05**

(21) Application number: **22209513.5**

(22) Date of filing: **25.11.2022**

(51) International Patent Classification (IPC):
**H05B 47/11** (2020.01)    **H05B 47/19** (2020.01)

(52) Cooperative Patent Classification (CPC):
**H05B 47/11; H05B 47/1985;** H05B 47/19;
Y02B 20/40

(54) **A MANAGEMENT SYSTEM AND A METHOD FOR CONTROLLING LUMINAIRES**

VERWALTUNGSSYSTEM UND VERFAHREN ZUR STEUERUNG VON LEUCHTEN

SYSTÈME DE GESTION ET PROCÉDÉ DE COMMANDE DE LUMINAIRES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **30.11.2021  FI 20216227**

(43) Date of publication of application:
**31.05.2023  Bulletin 2023/22**

(73) Proprietor: **Helvar Oy Ab
02150 Espoo (FI)**

(72) Inventor: **JUSLÉN, Henri
02150 Espoo (FI)**

(74) Representative: **Väänänen, Janne Kalervo
Vanarix Oy
Laaksolahdentie 74
02730 Espoo (FI)**

(56) References cited:
**EP-A1- 3 799 533        EP-A1- 3 846 591
EP-A1- 3 908 083        WO-A1-2015/189118
WO-A1-2018/050570    KR-A- 20150 066 220**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# EP 4 188 039 B1

**Description**

**Field of the disclosure**

The disclosure relates generally to illuminating engineering. More particularly, the disclosure relates to a management system for controlling one or more luminaires. Furthermore, the disclosure relates to a method and to a data processor program for controlling one or more luminaires.

**Background**

Many lighting systems comprise luminaires for illuminating an area such as an indoor working place and a lighting control system that is configured to control the luminaires in accordance with one or more control parameters. A control parameter of the lighting control system can be for example a target illuminance level in the area illuminated by the luminaires. Furthermore, a lighting system may comprise one or more light sensors and/or one or more presence sensors which provide control information to the lighting control system.

Many lighting requirements are specified in standards such as the European norm EN 12464-1 which specifies lighting requirements for humans in indoor working places, wherein the specified lighting requirements meet the needs for visual comfort and performance of people having normal ophthalmic i.e. visual capacity. One of the items in the above-mentioned European norm EN 12464-1 is that an illuminance level in an area which has a low daylight provision is recommended to be higher than a corresponding illuminance level recommended for an area with a higher daylight provision. Therefore, to save energy, a lighting system needs information about amount of daylight on an area illuminated by the lighting system.

A straightforward approach to estimate an amount of daylight on an indoor area is based on light sensors which measure ambient light so that luminaires are switched off during the measurement. The switching off periods of the luminaires can be however inconvenient to people being on the indoor area under consideration. Therefore, there is a need for lighting systems capable of estimating an amount of daylight so that the estimation process does not impair the operation of the lighting system.

Publication EP3799533 describes a lighting control device that comprises control means for controlling light output from at least one light source in accordance with a predefined lighting control logic and monitoring means for monitoring operation of the light source and/or one or more other light sources based on a light sensor signal that is descriptive of observed light level in a space. The monitoring means are arranged to carry out a monitoring procedure that comprises: deriving an expected light level characteristic based on information received at the lighting control device, deriving a current observed light level characteristic based on the light sensor signal, determining whether the current observed light level characteristic matches the expected light level characteristic, and detecting a malfunction in response to the current observed light level characteristic failing to match the expected light level characteristic.

Publication KR20150066220 describes a control system for controlling an equipment status indicating lamp of a submarine. The control system senses a lighting state of an equipment installation space using a light detection unit, e.g. a light-dependent resistor, being linked to a turned on/turned off state of a lamp illuminating the space to be capable of controlling the equipment status indicating lamp. The control system comprises a control unit linked to the light detection unit responsive to the illumination state of the space to turn on or turn off the equipment status indicating lamp.

Publication WO2018050570 describes a grooming appliance having an adaptive lighting system. The adaptive lighting system comprises at least one sensor arranged to detect an illumination-indicative value in the vicinity of a treatment head of the appliance, at least one light source arranged to illuminate a treatment zone, and a lighting control unit operatively coupled with the at least one sensor and the at least one light source. The lighting control unit is arranged to control the at least one light source dependent on the illumination-indicative value detected by the at least one sensor, where the lighting control unit is arranged to increase a target illumination level when a detected actual illumination level is low, and to decrease a target illumination level when a detected actual illumination level is high.

Publication EP3846591 describes a method for classifying a plurality of luminaires based on respective sensor data captured at respective locations of the plurality of luminaires. The method comprises obtaining the respective sensor data for the plurality of luminaires, the respective sensor data for each luminaire comprising respective one or more time series of sensor values that each represent a respective environmental characteristic as a function of time for a respective one of the plurality of luminaires, and assigning at least one of the plurality of luminaires into one of two or more predefined luminaire classes based on variation of the sensor values in the respective one or more series of values in the sensor data obtained for the respective luminaire.

Publication EP3908083 describes a management system for controlling luminaires. The management system comprises presence sensors configured to produce occupancy data indicative of occupancies on sub-areas of a space illuminated with the luminaires. The management system comprises a control system responsive to the occupancy data and configured to dim down one or more of the luminaires when the occupancy data indicates that a sub-area illuminated by the one or more luminaires is unoccupied. The control system is configured to increase the colour temperature of light emitted by the one or more luminaires when dimming down the one or more luminaires. The dimming saves energy, and the increasing the colour temperature of the luminaires being dimmed down eliminates or at least mitigates visual discomfort due to variation in a level of light between occupied sub-areas and unoccupied sub-areas.

## Summary

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments of the invention.

In accordance with the invention, there is provided a new management system for controlling one or more luminaires. The management system comprises:

- one or more light sensors configured to produce one or more light measurement signals indicative of light falling on the one or more light sensors,

- a lighting control system configured to control the one or more luminaires in accordance with one or more control parameters, and

- a data processing system configured to:

  - form one or more dependency indicators expressing dependence of the one or more light measurement signals on one or more operational statuses of the one or more luminaires, and

  - set the one or more control parameters based on at least the one or more dependency indicators.

The above-mentioned one or more dependency indicators indicate how strictly the light measurement signals follow the operational statuses of the luminaires, and thus the one or more dependency indicators indicate how much daylight, and/or other external light, an area illuminated by the luminaires receives. This information can be used for setting the one or more control parameters of the lighting control system.

The one or more control parameters may comprise for example a target illuminance level in an area illuminated by the one or more luminaires, and the lighting control system can be configured to control the one or more luminaires based on the one or more light measurement signals so that the illuminance is at least the required target illuminance level. The target illuminance level can be set for example in accordance with the European norm EN 12464-1 so that the target illuminance level is lower when the one or more dependency indicators indicate a higher daylight provision, and correspondingly the target illuminance level is higher when the one or more dependency indicators indicate a lower daylight provision.

In accordance with the invention, there is also provided a new lighting system that comprises:

- one or more luminaires, and

- a management system according to the invention and configured to control the one or more luminaires.

In accordance with the invention, there is also provided a new method for controlling one or more luminaires. The method comprises:

- producing one or more light measurement signals indicative of light falling on one or more light sensors,

- controlling the one or more luminaires in accordance with one or more control parameters,

- forming one or more dependency indicators expressing dependence of the one or more light measurement signals on one or more operational statuses of the one or more luminaires, and

- setting the one or more control parameters based on at least the one or more dependency indicators.

In accordance with the invention, there is also provided a new data processor program for controlling one or more luminaires. The data processor program comprises instructions for controlling a programmable data processing system to:

- receive one or more light measurement signals indicative of light falling on one or more light sensors and information indicative of an operational status of each of the one or more luminaires,

- form one or more dependency indicators expressing dependence of the one or more light measurement signals on the one or more operational statuses of the one or more luminaires, and

- set, based on at least the one or more dependency indicators, one or more control parameters of a lighting control system configured to control the one or more luminaires in accordance with the one or more control parameters.

The above-mentioned data processor program can be called a computer program provided that a computer is understood in a broad sense so that e.g. a programmable controller or another programmable device is deemed to be a computer.

In accordance with the invention, there is also provided a new data processor program product. The data processor program product comprises a non-volatile data processor readable medium encoded with a data processor program according to the invention.

Exemplifying embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features. Furthermore, it is to be understood that the use of "a" or "an", i.e. a singular form, throughout this document does not exclude a plurality.

## Brief description of the figures

Exemplifying and non-limiting embodiments and their advantages are explained in greater detail below with reference to the accompanying drawings, in which:

figure 1 illustrates a lighting system according to an exemplifying and non-limiting embodiment,
figure 2 illustrates a lighting system according to an exemplifying and non-limiting embodiment,
figure 3 illustrates a lighting system according to an exemplifying and non-limiting embodiment, and
figure 4 shows a flowchart of a method according to an exemplifying and non-limiting embodiment for controlling one or more luminaires.

## Description of exemplifying and non-limiting embodiments

The specific examples provided in the description below should not be construed as limiting the scope and/or the applicability of the accompanied claims. The invention is defined by the appended claims. Lists and groups of examples provided in the description below are not exhaustive unless otherwise explicitly stated.

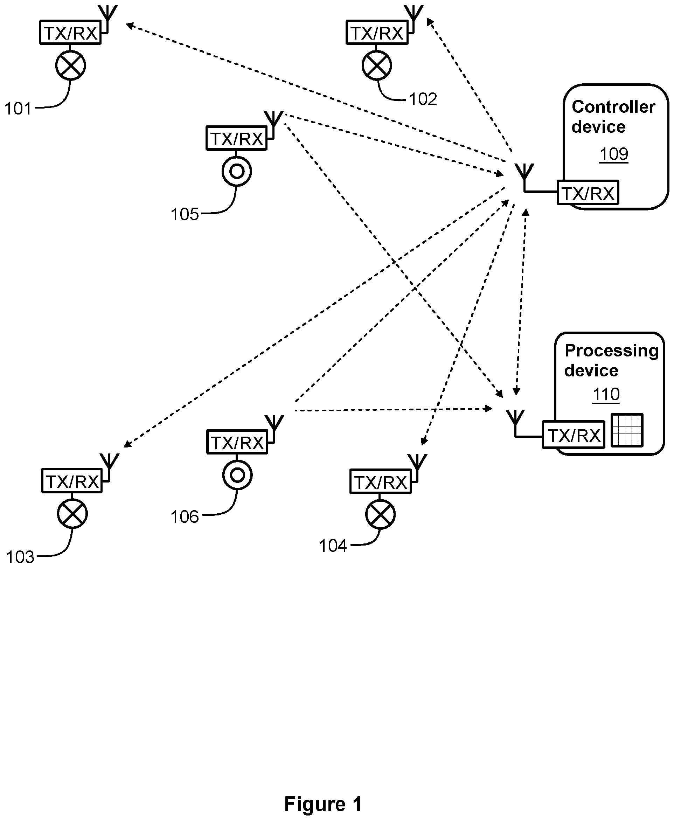

Figure 1 illustrates a lighting system according to an exemplifying and non-limiting embodiment. The lighting system comprises luminaires 101, 102, 103, and 104. The lighting system comprises a management system according to an exemplifying and non-limiting embodiment for controlling the luminaires 101-104. Furthermore, the luminaires 103-104 can be manually controllable with control means e.g. control buttons. The management system comprises light sensors 105 and 106 configured to produce light measurement signals indicative of light falling on the light sensors. The management system comprises a lighting control system that is configured to control the luminaires 101-105 in accordance with one or more control parameters. The management system comprises a data processing system that is configured to form one or more dependency indicators each expressing dependence of one of the light measurement signals on an operational status of one of the luminaires 101-104. The data processing system is configured to set the one or more control parameters based on at least the one or more dependency indicators. The one or more control parameters may comprise for example a target illuminance level in an area illuminated by the luminaires 101-104, and the lighting control system can be configured to control the luminaires 101-104 based on the light measurement signals produced by the light sensors 105 and 106 so that the illuminance is at least the required target illuminance level. The data processing system can be configured to set the target illuminance level for example in accordance with the European norm EN 12464-1 so that the target illuminance level is higher, e.g. 750 lux, when the one or more dependency indicators indicate a lower daylight provision, and correspondingly the target illuminance level is lower, e.g. 500 lux, when the one or more dependency indicators indicate a higher daylight provision.

It is also possible to set the one or more control parameters based on at least the one or more dependency indicators so that so called scenes are defined in the lighting system. Each scene comprises one or more scene-specific control parameters, and one of the scenes is selected for use in each situation based on at least the one or more dependency indicators. One of the scenes may correspond to normal daylight with, for example, 50% light output level of the luminaires, and another one of the scenes may correspond to low daylight provision, with, for example, 75% light output level of the luminaires. The light levels and possible other control parameters associated with each scene can be saved for example in memories of the luminaires.

In the exemplifying management system illustrated in figure 1, the above-mentioned lighting control system is implemented with a controller device 109 and the above-mentioned data processing system is implemented with a processing device 110. Thus, in this exemplifying case, both the lighting control system and the data processing system are implemented as centralized devices. The controller device 109 comprises a receiver RX configured to receive the light measurement signals from the light sensors 105 and 106 and the one or more control parameters from the processing device 110. The controller device 109 comprises a transmitter configured to transmit lighting control signals to the processing device 110 and to the luminaires 101-104. The lighting control signals determine the operational statutes of the luminaires 101-104 The processing device 110 comprises a receiver RX configured to receive the light measurement signals from the light sensors 105 and 106 and the lighting control signals from the controller device 109. The processing device 110 is configured to deduce the operational statuses of the luminaires 101-104 based on the received lighting control signals. The processing device 110 comprises a transmitter TX configured to transmit the one or more control parameters to the controller device 109.

In the exemplifying management system illustrated in figure 1, the above-mentioned receivers and transmitters are wireless devices. Wireless data transfer withing the lighting system can be based on e.g. the Bluetooth Low Energy "BLE" network technology, the Zigbee network technology, the Thread network technology, or some other suitable wireless data transfer technology. It is however also possible that the data transfer or a part of it is implemented with corded links. For example, a management system according to an exemplifying and non-limiting embodiment can be implemented with a corded data transfer system that uses the Digital Addressable Lighting Interface "DALI" technology. In principle, the DALI technology is applicable in conjunction with wireless data transfer technologies, too. In figure 1, data-transfer paths within the lighting system are depicted with dashed line arrows. In practice, there can be intermediate routing or forwarding data network elements on one or more of the data-transfer paths.

In a management system according to an exemplifying and non-limiting embodiment, the data processing system is configured to form the above-mentioned one or more dependency indicators over a sliding time-window. In this exemplifying case, the one or more dependency indicators can be updated substantially continuously. In a management system according to another exemplifying and non-limiting embodiment, the data processing system is configured to form the one or more dependency indicators over temporally successive time windows which are non-overlapping with each other. In this exemplifying case, the one or more dependency indicators are updated periodically.

In a management system according to an exemplifying and non-limiting embodiment, the data processing system is configured to form one or more first dependency indicators related to a light measurement signal produced by a first one of the light sensors more often than to form one or more second dependency indicators related to one or more light measurement signals produced by one or more second ones of the light sensors. The first one of the light sensors is advantageously a particular one of the light sensors whose light measurement signal represents the daylight provision on the whole area better than any of the light measurement signals of the second ones of the light sensors, i.e. the first one of the light sensors is a representative light sensor. To reduce data processing work and data transfer, the one or more second dependency indicators can be updated less frequently than the one or more first dependency indicators.

In a management system according to an exemplifying and non-limiting embodiment, the data processing system is configured to form the above-mentioned one or more second dependency indicators in response to a situation in which one or more changes in the above-mentioned one or more first dependency indicators exceed a predetermined limit. In this exemplifying case, the one or more second dependency indicators are formed only when the one or more first dependency indicators based on the light measurement signal of the representative light sensor have changed enough.

In a management system according to an exemplifying and non-limiting embodiment, the data processing system is configured to maintain season-specific rules for changing the one or more control parameters based on at least the one or more dependency indicators. The data processing system is configured to select, in accordance with a current season, one of the season-specific rules to be used. For example, in winter, a target illuminance level can be increased more strongly as a response to a situation in which the one or more dependency indicators indicate a low daylight provision than in summer.

In a management system according to an exemplifying and non-limiting embodiment, the one or more dependency indicators are one or more correlations between the light measurement signals and the operational statuses of the luminaires, and the data processing system is configured to compute each of the one or more correlations according to the following equation:

$$\text{Corr}(i,\ j) = K(i,\ j) \times \{(E_i(t) - \mu_{Ei}) \times (c_j(t) - \mu_{cj})\}, \tag{1}$$

where $\text{Corr}(i, j)$ is the correlation, $E_i(t)$ is the $i^{\text{th}}$ one of the light measurement signals as a function of time, $c_j(t)$ is a status variable expressing the operational status of the $j^{\text{th}}$ one of the luminaires as a function of time, $\mu_{Ei}$ is a time average of the light measurement signal $E_i(t)$, $\mu_{cj}$ is a time average of the status variable $c_j(t)$, $K(i, j)$ is a factor that can be a constant or dependent on $E_i(t)$ and $c_j(t)$, and { } means average over time. $K(i, j)$ can be for example $\sigma_{Ei} \times \sigma_{cj}$, where $\sigma_{Ei}$ is the standard deviation of $E_i(t)$ and $\sigma_{cj}$ is the standard deviation of $c_j(t)$.

There are many ways to derive, based on at least the one or more dependency indicators, the one or more control parameters for the lighting control system. For example, a control parameter, such as a target illuminance level, can be a linear or nonlinear function of a weighted sum of the one or more dependency indicators. The weight coefficients of the weighted sum can be for example values which indicate how much daylight received at an area under consideration is able to affect the light measurement signals produced by different light sensors. It is to be noted that the invention is not limited to any specific ways to derive the one or more control parameters based on at least the one or more dependency indicators.

In a management system according to an exemplifying and non-limiting embodiment, the data processing system is configured to form difference indicators each being between two of the light measurement signals and indicative of a difference between temporal behaviors of the two light measurement signals. The data processing system is configured to classify, based on the difference indicators, the light measurement signals into groups so that within each group the light measurement signals are like or near like each other. To reduce data processing work and data transfer, the data processing system can be configured to form the one or more dependency indicators using only one light measurement signal from each group. For example, in an exemplifying case where the light measurement signal produced by the light sensor 106 is like or near like the light measurement signal produced by the light sensor 105, data processing work and data transfer can be reduced by using only the light measurement signal produced by the light sensor 105 when forming the one or more dependency indicators. Correspondingly, the luminaires can be classified into groups so that the operational statuses of the luminaires within each group are like or near like each other. The data processing system can be configured to form the one or more dependency indicators using the operation status of only one luminaire from each group.

The above-mentioned difference indicators, each of which is indicative of a difference between temporal behaviors of two light measurement signals, can be formed according to the following equation:

$$D(i,\ j) = \{E_i(t)^2\} - \{E_i(t) \times E_j(t)\}^2 / \{E_j(t)^2\}, \tag{2}$$

where $D(i, j)$ is the difference indicator between $i^{\text{th}}$ and $j^{\text{th}}$ ones of the light measurement signals, $E_i(t)$ and $E_j(t)$ are the $i^{\text{th}}$ and $j^{\text{th}}$ ones of the light measurement signals as a function of time and { } means average over time. The above-mentioned difference indicator $D(i, j)$ is $\{(E_i(t) - \alpha E_j(t))^2\}$ when $\alpha$ is selected so that the $\{(E_i(t) - {}_{\alpha}E_j(t))^2\}$ is minimized.

The management system may further comprise one or more presence sensors each of which may comprise for example a passive infrared "PIR" sensor for detecting presence through motion, a thermal camera, a low-resolution optical camera, and/or a gigahertz-radar. The one or more presence sensors are communicatively connected to the lighting control system to enable the lighting control system to control the luminaires 101-104 in accordance with occupancy detected by the one or more presence sensors. Lights can be turned on or brightened when occupancy is detected in an area of the luminaires, and the lights and turned off or dimmed to a lower level after a prolonged period of non-occupancy. The presence sensors are not shown in figure 1.

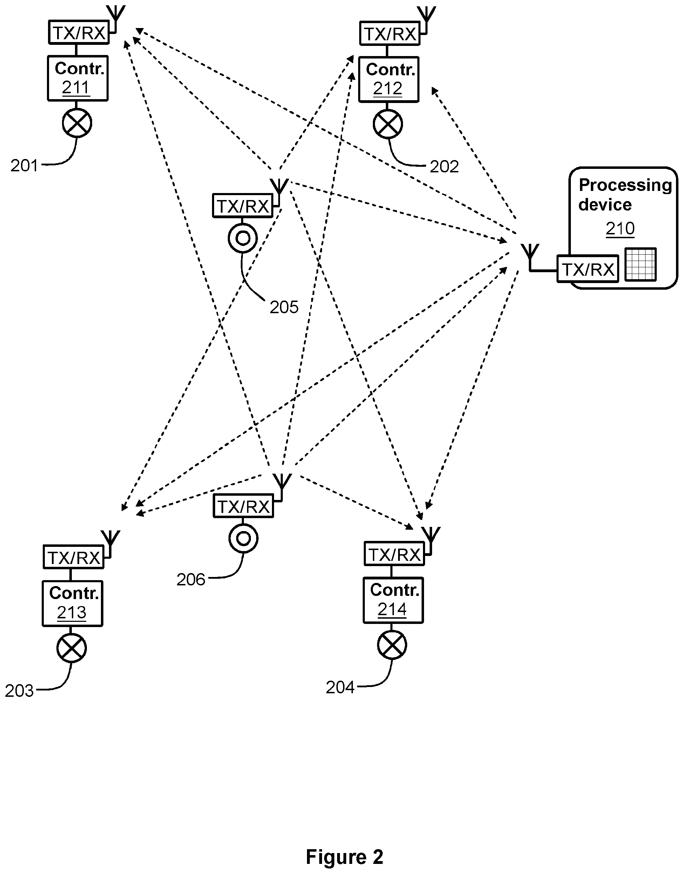

Figure 2 illustrates a lighting system according to an exemplifying and non-limiting embodiment. The lighting system comprises luminaires 201, 202, 203, and 204. The lighting system comprises a management system according to an exemplifying and non-limiting embodiment for controlling the luminaires 201-204. Furthermore, the luminaires 203-204 can be manually controllable with control means e.g. control buttons. The management system comprises light sensors 205 and 206 configured to produce light measurement signals indicative of light falling on the light sensors. The management system comprises a lighting control system that is configured to control the luminaires 201-205 in accordance with one or more control parameters. The management system comprises a data processing system that is configured to form one or more dependency indicators each expressing dependence of one of the light measurement signals on an operational status of one of the luminaires 201-204. The data processing system is configured to set the one or more control parameters based on at least the one or more dependency indicators.

In the exemplifying management system illustrated in figure 2, the above-mentioned lighting control system is implemented with controllers 211, 212, 213, and 214 installed on the luminaires 201-204 and the above-mentioned data processing system is implemented with a processing device 210. Thus, in this exemplifying case, the lighting control system has a distributed architecture whereas the data processing system has a centralized architecture. Each of the luminaires 201-204 comprises a transmitter TX configured to transmit a light status signal of the luminaire to the processing device 210 and a receiver RX configured to receive the one or more control parameters from the processing device 210 and the light measurement signals from the light sensors 205 and 206. The processing device 210 comprises a receiver RX configured to receive the light measurement signals from the light sensors 205 and 206 and the light status signals from the luminaires 201-204. The processing device 210 is configured to deduce the operational statuses of the luminaires 201-204 based on the received light status signals. The processing device 210 comprises a transmitter TX configured to transmit the one or more control parameters to the luminaires 201-204.

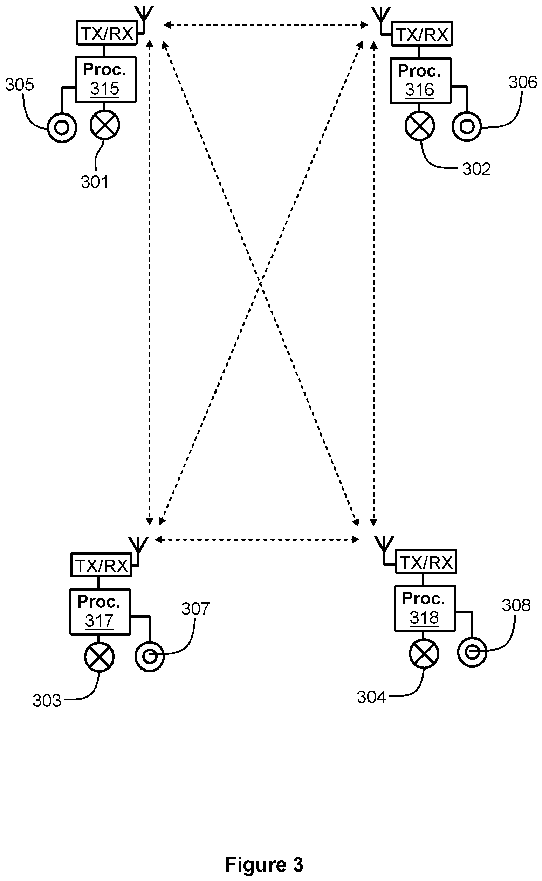

Figure 3 illustrates a lighting system according to an exemplifying and non-limiting embodiment. The lighting system comprises luminaires 301, 302, 303, and 304. The lighting system comprises a management system according to an exemplifying and non-limiting embodiment for controlling the luminaires 301-304. Furthermore, the luminaires 303-304 can be manually controllable with control means e.g. control buttons. The management system comprises light sensors 305, 306, 307, and 308 configured to produce light measurement signals indicative of light falling on the light sensors. The management system comprises a lighting control system that is configured to control the luminaires 301-305 in accordance with one or more control parameters. The management system comprises a data processing system that is configured to form one or more dependency indicators each expressing dependence of one of the light measurement signals on an operational status of one of the luminaires 301-304. The data processing system is configured to set the one or more control parameters based on at least the one or more dependency indicators.

In the exemplifying management system illustrated in figure 3, both the above-mentioned lighting control system and the data processing system are implemented with processors 315, 316, 317, and 318 installed on the luminaires 201-204. Thus, in this exemplifying case, both the lighting control system and the data processing system have a distributed architecture. Each of the luminaires 301-304 comprises a transmitter TX configured to transmit a light status signal of the luminaire to the other luminaires. Each of the luminaires 301-304 comprises a receiver RX configured to receive the light status signals from the other luminaires. The processor of each luminaire is configured to deduce the operational statures of the other luminaires based on the received light status signals. Furthermore, the light measurement signal measured by the light sensor of each luminaire can be transmitted to the other luminaires.

It is to be noted that management systems according to different embodiments of the invention can be implemented according to many different architectures. Three exemplifying architectures are described above with reference to figures 1-3. For a fourth example, a management system according to an exemplifying and non-limiting embodiment may comprise many processor units which are separate from both luminaires and light sensors, and which are communicatively connected to the light sensors and to the luminaires. Thus, management systems according to different embodiments of the invention are not limited to any specific implementation architectures.

The processing device 110 shown in figure 1 can be implemented with one or more data processors each of which can be a programmable data processor provided with an appropriate software, a dedicated hardware data processor such as for example an application specific integrated circuit "ASIC", and/or a configurable hardware data processor such as for example a field programmable gate array "FPGA". Furthermore, the processing device 110 may comprise one or more memory devices such as e.g. a random-access memory "RAM" circuit. Correspondingly, each of the other processing devices and each of the controller devices shown in figures 1-3 can be implemented with one or more data processors and one or more memory devices.

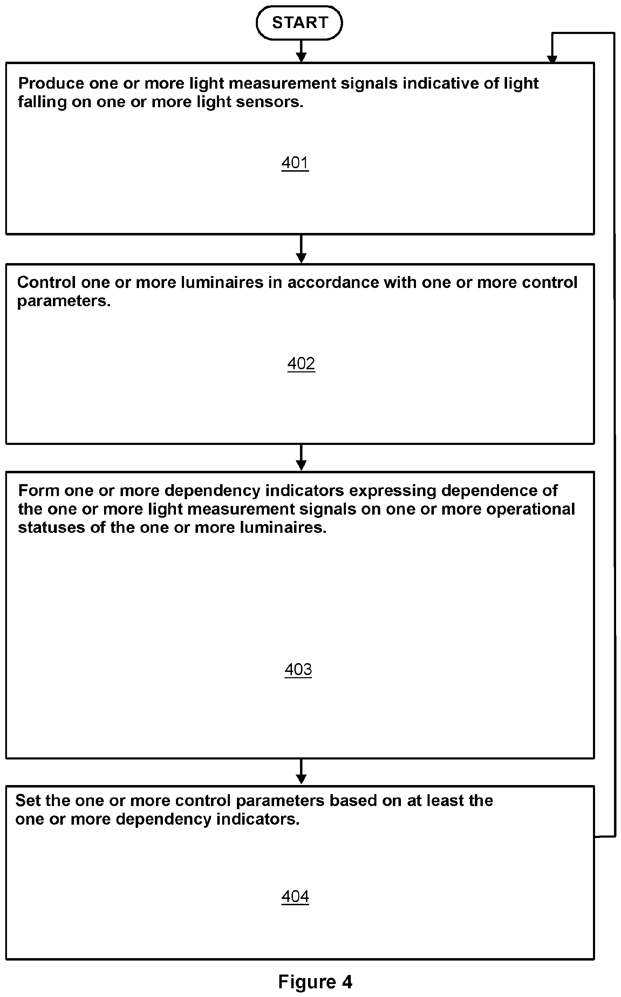

Figure 4 shows a flowchart of a method according to an exemplifying and non-limiting embodiment for controlling one or more luminaires. The method comprises the following actions:

- action 401: producing one or more light measurement signals indicative of light falling on one or more light sensors,

- action 402: controlling the one or more luminaires in accordance with one or more control parameters such as for example a target illuminance level, and

- action 403: forming one or more dependency indicators expressing dependence of the one or more light measurement signals on one or more operational statuses of the one or more luminaires, and

- action 404: setting the one or more control parameters based on at least the one or more dependency indicators.

In a method according to an exemplifying and non-limiting embodiment, the one or more control parameters comprise a target illuminance level for an area illuminated by the one or more luminaires, and the method comprises setting the target illuminance level based on at least the one or more dependency indicators so that the target illuminance level is a decreasing function of each of the one or more dependency indicators.

A method according to an exemplifying and non-limiting embodiment comprises forming the above-mentioned one or more dependency indicators over a sliding time-window.

A method according to an exemplifying and non-limiting embodiment comprises forming the above-mentioned one or more dependency indicators over temporally successive time windows which are non-overlapping with each other.

In a method according to an exemplifying and non-limiting embodiment there are many light sensors, and the method comprises forming one or more dependency indicators related to the light measurement signal produced by a first one of the light sensors more often than forming one or more dependency indicators related to the one or more light measurement signals produced by one or more second ones of the light sensors.

In a method according to an exemplifying and non-limiting embodiment there are many light sensors, and the method comprises forming the one or more dependency indicators related to the one or more light measurement signals produced by the one or more second ones of the light sensors in response to a situation in which one or more changes of the one or more dependency indicators related to the light measurement signal produced by the first one of the light sensors exceed a predetermined limit.

A method according to an exemplifying and non-limiting embodiment comprises maintaining season-specific rules for changing the one or more control parameters based on at least the one or more dependency indicators and selecting, in accordance with a current season, one of the season-specific rules to be used.

In a method according to an exemplifying and non-limiting embodiment, the one or more dependency indicators are one or more correlations between the one or more light measurement signals and the one or more operational statuses of the one or more luminaires, and the method comprises computing each of the one or more correlations according to the following equation:

$$\text{Corr}(i, j) = K(i, j) \times \{(E_i(t) - \mu_{Ei}) \times (c_j(t) - \mu_{cj})\},$$

where $\text{Corr}(i, j)$ is the correlation, $E_i(t)$ is the $i^{th}$ one of the one or more light measurement signals as a function of time, $c_j(t)$ is a status variable expressing the operational status of the $j^{th}$ one of the one or more luminaires as a function of time, $\mu_{Ei}$ is a time average of the light measurement signal $E_i(t)$, $\mu_{cj}$ is a time average of the status variable $c_j(t)$, $K(i, j)$ is a factor that can be a constant or dependent on $E_i(t)$ and $c_j(t)$, and { } means average over time.

In a method according to an exemplifying and non-limiting embodiment there are many light sensors, and the method comprises:

- forming difference indicators each being between two of the light measurement signals and indicative of a difference between temporal behaviors of the two light measurement signals,

- classifying, based on the difference indicators, the light measurement signals into groups where within each group the light measurement signals are like each other, and

- forming the one or more dependency indicators using only one light measurement signal from each group.

A method according to an exemplifying and non-limiting embodiment comprises forming each of the above-mentioned difference indicators according to the following equation:

$$D(i, j) = \{E_i(t)^2\} - \{E_i(t) \times E_j(t)\}^2 / \{E_j(t)^2\},$$

where $D(i, j)$ is the difference indicator between $i^{th}$ and $j^{th}$ ones of the light measurement signals, $E_i(t)$ and $E_j(t)$ are the $i^{th}$ and $j^{th}$ ones of the light measurement signals as a function of time, and { } means average over time.

In a method according to an exemplifying and non-limiting embodiment, the one or more dependency indicators are formed and the one or more control parameters are set by a processing device that receives the one or more light measurement signals and information indicative of the one or more operational statuses of the one or more luminaires via one or more data transfer links and transmits the one or more control parameters via one or more data transfer links.

In a method according to an exemplifying and non-limiting embodiment, the one or more luminaires are controlled in accordance with the one or more control parameters by a controller device that transmits one or more lighting control signals via one or more data transfer links to the one or more luminaires and receives the one or more control parameters via one or more data transfer links.

In a method according to an exemplifying and non-limiting embodiment, the one or more dependency indicators are formed, the one or more control parameters are set, and the one or more luminaires are controlled in accordance with the one or more control parameters by one or more controllers installed on the one or more luminaires each of which transmits a light status signal of the luminaire via one or more data transfer links to the other luminaires.

A data processor program according to an exemplifying and non-limiting embodiment comprises data processor executable instructions for controlling a programmable data processing system to carry out actions related to a method according to any of the above-described exemplifying embodiments.

A data processor program according to an exemplifying and non-limiting embodiment comprises software modules for controlling luminaires. The software modules comprise data processor executable instructions for controlling a programmable data processing system to:

- receive one or more light measurement signals indicative of light falling on one or more light sensors and information indicative of an operational status of each of the one or more luminaires,

- form one or more dependency indicators expressing dependence of the one or more light measurement signals on the one or more operational statuses of the one or more luminaires, and

- set, based on at least the one or more dependency indicators, one or more control parameters of a lighting control system configured to control the one or more luminaires in accordance with the one or more control parameters.

The above-mentioned software modules can be e.g. subroutines or functions implemented with a programming language suitable for the programmable data processor system.
A data processor program product according to an exemplifying and non-limiting embodiment comprises a data processor readable medium encoded with a data processor program according to an embodiment of invention.
A nonvolatile data processor readable medium according to an embodiment of invention is encoded with a data processor program according to an embodiment of invention.
A signal according to an exemplifying and non-limiting embodiment is encoded to carry information defining a data processor program according to an embodiment of invention.
The specific examples provided in the description given above should not be construed as limiting the scope and/or the applicability of the appended claims. The invention is defined by the appended claims. Lists and groups of examples provided in the description given above are not exhaustive unless otherwise explicitly stated.

**Claims**

1.  A management system for controlling one or more luminaires (101-104, 201-204, 301-304), the management system comprising:

    - one or more light sensors (105, 106, 205, 206, 305-308) configured to produce one or more light measurement signals indicative of light falling on the one or more light sensors, and
    - a lighting control system (109, 211-214, 315-318) configured to control the one or more luminaires in accordance with one or more control parameters,

    **characterized in that** the management system comprises a data processing system (110, 210, 315-318) configured to:

    - form one or more dependency indicators expressing dependence of the one or more light measurement signals on one or more operational statuses of the one or more luminaires, and
    - set the one or more control parameters based on at least the one or more dependency indicators.

2.  A management system according to claim 1, wherein the data processing system is configured to set a target illuminance level based on at least the one or more dependency indicators so that the target illuminance level is a decreasing function of each of the one or more dependency indicators, the target illuminance level belonging to the one or more control parameters of the lighting control system.

3.  A management system according to claim 1 or 2, wherein the data processing system is configured to form the one or more dependency indicators over a sliding time-window.

4.  A management system according to claim 1 or 2, wherein the data processing system is configured to form the one or more dependency indicators over temporally successive time windows non-overlapping with each other.

5.  A management system according to any one of claims 1-4, wherein the management system comprises many light sensors and the data processing system is configured to form each of the one or more dependency indicators related to the light measurement signal produced by a first one of the light sensors more often than to form each of the one or more dependency indicators related to the one or more light measurement signals produced by one or more second ones of the light sensors.

6. A management system according to claim 5, wherein the data processing system is configured to form the one or more dependency indicators related to the one or more light measurement signals produced by the one or more second ones of the light sensors in response to a situation in which one or more changes of the one or more dependency indicators related to the light measurement signal produced by the first one of the light sensors exceed a predetermined limit.

7. A management system according to any one of claims 1-6, wherein the data processing system is configured to maintain season-specific rules for changing the one or more control parameters based on at least the one or more dependency indicators, and to select, in accordance with a current season, one of the season-specific rules to be used.

8. A management system according to any one of claims 1-7, wherein the one or more dependency indicators are one or more correlations between the one or more light measurement signals and the one or more operational statuses of the one or more luminaires, and the data processing system is configured to compute each of the one or more correlations according to the following equation:

$$\mathrm{Corr}(i, j) = K(i, j) \times \{(E_i(t) - \mu_{Ei}) \times (c_j(t) - \mu_{cj})\},$$

where $\mathrm{Corr}(i, j)$ is the correlation, $E_i(t)$ is $i^{th}$ one of the one or more light measurement signals as a function of time, $c_j(t)$ is a status variable expressing the operational status of $j^{th}$ one of the one or more the luminaires as a function of time, $\mu_{Ei}$ is a time average of the light measurement signal $E_i(t)$, $\mu_{cj}$ is a time average of the status variable $c_j(t)$, $K(i, j)$ is a factor that can be a constant or dependent on $E_i(t)$ and $c_j(t)$, and $\{ \}$ means average over time.

9. A management system according to any one of claims 1-8, wherein the management system comprises many light sensors and the data processing system is configured to:

- form difference indicators each being between two of the light measurement signals and indicative of a difference between temporal behaviors of the two light measurement signals,
- classify, based on the difference indicators, the light measurement signals into groups where within each group the light measurement signals are like each other, and
- form the one or more dependency indicators using only one light measurement signal from each group.

10. A management system according to claim 9, wherein the data processing system is configured to compute each of the difference indicators according to the following equation:

$$D(i, j) = \{E_i(t)^2\} - \{E_i(t) \times E_j(t)\}^2 / \{E_j(t)^2\},$$

where $D(i, j)$ is the difference indicator between $i^{th}$ and $j^{th}$ ones of the light measurement signals, $E_i(t)$ and $E_j(t)$ are the $i^{th}$ and $j^{th}$ ones of the light measurement signals as a function of time, and $\{ \}$ means average over time.

11. A management system according to any one of claims 1-10, wherein the data processing system is a processing device (110, 210) comprising:

- a receiver (RX) configured to receive the one or more light measurement signals from the one or more light sensors and one or more lighting control signals from the lighting control system, the one or more lighting control signals defining the one or more operational statuses of the one or more luminaires, and
- a transmitter (TX) configured to transmit the one or more control parameters to the lighting control system.

12. A management system according to any one of claims 1-11, wherein the lighting control system is a controller device (109) comprising:

- a transmitter (TX) configured to transmit one or more lighting control signals to the data processing system and to the one or more luminaires, the one or more lighting control signals defining the one or more operational statuses of the one or more luminaires, and
- a receiver (RX) configured to receive the one or more control parameters from the data processing system.

# EP 4 188 039 B1

13. A lighting system comprising:

- one or more luminaires (101-104, 201-204, 301-304), and
- a management system according to any one of claims 1-12 and configured to control the one or more luminaires.

14. A method for controlling one or more luminaires, the method comprising:

- producing (401) one or more light measurement signals indicative of light falling on one or more light sensors, and
- controlling (402) the one or more luminaires in accordance with one or more control parameters,

**characterized in that** the method comprises:

- forming (403) one or more dependency indicators expressing dependence of the one or more light measurement signals on one or more operational statuses of the one or more luminaires, and
- setting (404) the one or more control parameters based on at least the one or more dependency indicators.

15. A data processor program for controlling one or more luminaires, the data processor program comprising data processor executable instructions for controlling a programmable data processing system to:

- receive one or more light measurement signals indicative of light falling on one or more light sensors and information indicative of an operational status of each of the one or more luminaires,

**characterized in that** the data processor program comprises data processor executable instructions for controlling the programmable data processing system to:

- form one or more dependency indicators expressing dependence of the one or more light measurement signals on the one or more operational statuses of the one or more luminaires, and
- set, based on at least the one or more dependency indicators, one or more control parameters of a lighting control system configured to control the one or more luminaires in accordance with the one or more control parameters.

**Patentansprüche**

1. Verwaltungssystem zum Steuern von einer oder mehreren Leuchten (101-104, 201-204, 301-304), wobei das Verwaltungssystem Folgendes umfasst:

- einen oder mehrere Lichtsensoren (105, 106, 205, 206, 305-308), die konfiguriert sind, um ein oder mehrere Lichtmesssignale zu produzieren, die auf auf den einen oder die mehreren Lichtsensoren fallendes Licht hinweisen, und
- ein Beleuchtungssteuersystem (109, 211-214, 315-318), das konfiguriert ist, um die eine oder die mehreren Leuchten gemäß einem oder mehreren Steuerparametern zu steuern,

**dadurch gekennzeichnet, dass** das Verwaltungssystem ein Datenverarbeitungssystem (110, 210, 315-318) umfasst, das konfiguriert ist, um:

- einen oder mehrere Abhängigkeitsindikatoren zu bilden, die eine Abhängigkeit des einen oder der mehreren Lichtmesssignale von einem oder mehreren Betriebsstatus der einen oder der mehreren Leuchten ausdrücken, und
- den einen oder die mehreren Steuerparameter basierend auf mindestens dem einen oder den mehreren Abhängigkeitsindikatoren festzulegen.

2. Verwaltungssystem nach Anspruch 1, wobei das Datenverarbeitungssystem konfiguriert ist, um eine Zielbeleuchtungsstärke basierend auf mindestens dem einen oder den mehreren Abhängigkeitsindikatoren festzulegen, so dass die Zielbeleuchtungsstärke eine abnehmende Funktion jedes des einen oder der mehreren Abhängigkeitsindikatoren ist, wobei die Zielbeleuchtungsstärke zu dem einen oder den mehreren Steuerparametern des Beleuchtungssteuersystems gehört.

11

3. Verwaltungssystem nach Anspruch 1 oder 2, wobei das Datenverarbeitungssystem konfiguriert ist, um den einen oder die mehreren Abhängigkeitsindikatoren über ein gleitendes Zeitfenster zu bilden.

4. Verwaltungssystem nach Anspruch 1 oder 2, wobei das Datenverarbeitungssystem konfiguriert ist, um den einen oder die mehreren Abhängigkeitsindikatoren über zeitlich aufeinanderfolgende Zeitfenster zu bilden, die sich nicht miteinander überlappen.

5. Verwaltungssystem nach einem der Ansprüche 1-4, wobei das Verwaltungssystem viele Lichtsensoren umfasst und das Datenverarbeitungssystem konfiguriert ist, um jeden des einen oder der mehreren Abhängigkeitsindikatoren in Verbindung mit dem Lichtmesssignal, das von einem ersten der Lichtsensoren produziert wird, öfter zu bilden, als jeden des einen oder der mehreren Abhängigkeitsindikatoren in Verbindung mit dem einen oder den mehreren Lichtmesssignalen zu bilden, die von einem oder mehreren zweiten der Lichtsensoren produziert werden.

6. Verwaltungssystem nach Anspruch 5, wobei das Datenverarbeitungssystem konfiguriert ist, um den einen oder die mehreren Abhängigkeitsindikatoren in Verbindung mit dem einen oder den mehreren Lichtmesssignalen, die von dem einen oder den mehreren zweiten der Lichtsensoren produziert werden, als Reaktion auf eine Situation zu bilden, in welcher eine oder mehrere Änderungen des einen oder der mehreren Abhängigkeitsindikatoren in Verbindung mit dem Lichtmesssignal, das von dem ersten der Lichtsensoren produziert wird, eine vorgegebene Grenze überschreiten.

7. Verwaltungssystem nach einem der Ansprüche 1-6, wobei das Datenverarbeitungssystem konfiguriert ist, um jahreszeitenspezifische Regeln zum Ändern des einen oder der mehreren Steuerparameter basierend auf mindestens dem einen oder den mehreren Abhängigkeitsindikatoren beizubehalten und gemäß einer aktuellen Jahreszeit eine der zu verwendenden jahreszeitspezifischen Regeln auszuwählen.

8. Verwaltungssystem nach einem der Ansprüche 1-7, wobei der eine oder die mehreren Abhängigkeitsindikatoren eine oder mehrere Korrelationen zwischen dem einen oder den mehreren Lichtmesssignalen und dem einen oder den mehreren Betriebsstatus der einen oder der mehreren Leuchten sind und das Datenverarbeitungssystem konfiguriert ist, um jede der einen oder der mehreren Korrelationen gemäß der folgenden Gleichung zu berechnen:

$$\mathrm{Corr}(i, j) = K(i, j) \times \left\{ (E_i(t) - \mu_{Ei}) \times \left( c_j(t) - \mu_{cj} \right) \right\},$$

wobei $\mathrm{Corr}(i, j)$ die Korrelation ist, $E_i(t)$ das i-te des einen oder der mehreren Lichtmesssignale als Funktion der Zeit ist, $c_j(t)$ eine Statusvariable ist, die den Betriebsstatus der j-ten der einen oder der mehreren Leuchten als Funktion der Zeit ausdrückt, $\mu_{EI}$ ein Zeitdurchschnitt des Lichtmesssignals $E_i(t)$ ist, $\mu_{cj}$ ein Zeitdurchschnitt der Statusvariable $c_j(t)$ ist, $K(i, j)$ ein Faktor ist, der eine Konstante oder von $E_i(t)$ und $c_j(t)$ abhängig sein kann, und mit $\{\}$ der Durchschnitt über die Zeit gemeint ist.

9. Verwaltungssystem nach einem der Ansprüche 1-8, wobei das Verwaltungssystem viele Lichtsensoren umfasst und das Datenverarbeitungssystem konfiguriert ist, um:

- Differenzindikatoren zu bilden, die jeweils zwischen zwei der Lichtmesssignale liegen und eine Differenz zwischen zeitlichen Verhalten der beiden Lichtmesssignale angeben,
- basierend auf den Differenzindikatoren die Lichtmesssignale in Gruppen zu klassifizieren, wo innerhalb jeder Gruppe die Lichtmesssignale einander gleichen, und
- den einen oder die mehreren Abhängigkeitsindikatoren unter Verwendung nur eines Lichtmesssignals aus jeder Gruppe zu bilden.

10. Verwaltungssystem nach Anspruch 9, wobei das Datenverarbeitungssystem konfiguriert ist, um jeden der Differenzindikatoren gemäß der folgenden Gleichung zu berechnen:

$$D(i, j) = \{E_i(t)^2\} - \left\{ E_i(t) \times E_j(t) \right\}^2 / \{E_j(t)^2\},$$

wobei $D(i, j)$ der Differenzindikator zwischen i-ten und j-ten der Lichtmesssignalen ist, $E_i(t)$ und $E_j(t)$ die i-ten und j-ten der Lichtmesssignale als Funktion der Zeit sind, und mit $\{\}$ der Durchschnitt über die Zeit gemeint ist.

**11.** Verwaltungssystem nach einem der Ansprüche 1-10, wobei das Datenverarbeitungssystem eine Verarbeitungsvorrichtung (110, 210) ist, die Folgendes umfasst:

- einen Empfänger (RX), der konfiguriert ist, um das eine oder die mehreren Lichtmesssignale von dem einen oder den mehreren Lichtsensoren und ein oder mehrere Beleuchtungssteuersignale von dem Beleuchtungssteuersystem zu empfangen, wobei das eine oder die mehreren Beleuchtungssteuersignale den einen oder die mehreren Betriebsstatus der einen oder der mehreren Leuchten definieren, und
- einen Sender (TX), der konfiguriert ist, um den einen oder die mehreren Steuerparameter zu dem Beleuchtungssteuersystem zu senden.

**12.** Verwaltungssystem nach einem der Ansprüche 1-11, wobei das Beleuchtungssteuersystem eine Steuervorrichtung (109) ist, die Folgendes umfasst:

- einen Sender (TX), der konfiguriert ist, um ein oder mehrere Beleuchtungssteuersignale zu dem Datenverarbeitungssystem und zu der einen oder den mehreren Leuchten zu senden, wobei das eine oder die mehreren Beleuchtungssteuersignale den einen oder die mehreren Betriebsstatus der einen oder der mehreren Leuchten definieren, und
- einen Empfänger (RX), der konfiguriert ist, um den einen oder die mehreren Steuerparameter von dem Datenverarbeitungssystem zu empfangen.

**13.** Beleuchtungssystem umfassend:

- eine oder mehrere Leuchten (101-104, 201-204, 301-304) und
- ein Verwaltungssystem nach einem der Ansprüche 1-12, das konfiguriert ist, um die eine oder die mehreren Leuchten zu steuern.

**14.** Verfahren zum Steuern von einer oder mehreren Leuchten, wobei das Verfahren Folgendes umfasst:

- Produzieren (401) von einem oder mehreren Lichtmesssignalen, die auf auf einen oder mehrere Lichtsensoren fallendes Licht hinweisen, und
- Steuern (402) der einen oder der mehreren Leuchten gemäß einem oder mehreren Steuerparametern,

**dadurch gekennzeichnet, dass** das Verfahren Folgendes umfasst:

- Bilden (403) eines oder mehrerer Abhängigkeitsindikatoren, die eine Abhängigkeit des einen oder der mehreren Lichtmesssignale von einem oder mehreren Betriebsstatus der einen oder der mehreren Leuchten ausdrücken, und
- Festlegen (404) des einen oder der mehreren Steuerparameter basierend auf mindestens dem einen oder den mehreren Abhängigkeitsindikatoren.

**15.** Datenprozessorprogramm zum Steuern von einer oder mehreren Leuchten, wobei das Datenverarbeitungsprogramm von einem Datenprozessor ausführbare Anweisungen zum Steuern eines programmierbaren Datenverarbeitungssystems umfasst, um:

- ein oder mehrere Lichtmesssignale, die auf auf einen oder mehrere Lichtsensoren fallendes Licht hinweisen, und Informationen, die einen Betriebsstatus jeder der einen oder mehreren Leuchten angeben, zu empfangen,

**dadurch gekennzeichnet, dass** das Datenverarbeitungsprogramm von einem Datenprozessor ausführbare Anweisungen zum Steuern des programmierbaren Datenverarbeitungssystems umfasst, um:

- einen oder mehrere Abhängigkeitsindikatoren zu bilden, die eine Abhängigkeit des einen oder der mehreren Lichtmesssignale von dem einen oder den mehreren Betriebsstatus der einen oder der mehreren Leuchten ausdrücken, und
- basierend auf mindestens dem einen oder den mehreren Abhängigkeitsindikatoren einen oder mehrere Steuerparameter eines Beleuchtungssteuersystems festzulegen, das konfiguriert ist, um die eine oder die mehreren Leuchten gemäß dem einen oder den mehreren Steuerparametern zu steuern.

## Revendications

1. Système de gestion pour commander un ou plusieurs luminaires (101-104, 201-204, 301-304), le système de gestion comprenant :

   - un ou plusieurs capteurs de lumière (105, 106, 205, 206, 305-308) configurés pour produire un ou plusieurs signaux de mesure de lumière indiquant la lumière tombant sur le ou les capteurs de lumière, et
   - un système de commande d'éclairage (109, 211-214, 315-318) configuré pour commander le ou les luminaires conformément à un ou plusieurs paramètres de commande,

   **caractérisé en ce que** le système de gestion comprend un système de traitement de données (110, 210, 315-318) configuré pour :

   - former un ou plusieurs indicateurs de dépendance exprimant la dépendance du ou des signaux de mesure de lumière sur un ou plusieurs états de fonctionnement du ou des luminaires, et
   - régler le ou les paramètres de commande sur la base d'au moins le ou les indicateurs de dépendance.

2. Système de gestion selon la revendication 1, dans lequel le système de traitement de données est configuré pour régler un niveau d'éclairement cible sur la base d'au moins le ou les indicateurs de dépendance de sorte que le niveau d'éclairement cible soit une fonction décroissante de chacun du ou des indicateurs de dépendance, le niveau d'éclairement cible appartenant au ou aux paramètres de commande du système de commande d'éclairage.

3. Système de gestion selon la revendication 1 ou 2, dans lequel le système de traitement de données est configuré pour former le ou les indicateurs de dépendance sur une fenêtre temporelle glissante.

4. Système de gestion selon la revendication 1 ou 2, dans lequel le système de traitement de données est configuré pour former le ou les indicateurs de dépendance sur des fenêtres temporelles successives temporellement ne se superposant pas les unes avec les autres.

5. Système de gestion selon une quelconque des revendications 1 à 4, dans lequel le système de gestion comprend de nombreux capteurs de lumière et le système de traitement de données est configuré pour former chacun des un ou plusieurs indicateurs de dépendance liés au signal de mesure de lumière produit par un premier des capteurs de lumière plus souvent que pour former chacun des un ou plusieurs indicateurs de dépendance liés au ou aux signaux de mesure de lumière produits par un ou plusieurs deuxièmes capteurs de lumière.

6. Système de gestion selon la revendication 5, dans lequel le système de traitement de données est configuré pour former le ou les indicateurs de dépendance liés à un ou plusieurs signaux de mesure de lumière produits par le ou les deuxièmes capteurs de lumière en réponse à une situation dans laquelle une ou plusieurs variations du ou des indicateurs de dépendance liés au signal de mesure de lumière produit par le premier des capteurs de lumière dépassent une limite prédéterminée.

7. Système de gestion selon une quelconque des revendications 1 à 6, dans lequel le système de traitement de données est configuré pour maintenir des règles spécifiques à la saison pour modifier le ou les paramètres de commande en fonction d'au moins le ou les indicateurs de dépendance et pour sélectionner, en fonction d'une saison actuelle, une des règles spécifiques à la saison à utiliser.

8. Système de gestion selon une quelconque des revendications 1 à 7, dans lequel le ou les indicateurs de dépendance sont une ou plusieurs corrélations entre le ou les signaux de mesure de lumière et le ou les états de fonctionnement du ou des luminaires et le système de traitement de données est configuré pour calculer chacune de la ou des corrélations selon l'équation suivante :

$$\text{Corr}(i, j) = K(i, j) \times \left\{ (E_i(t) - \mu_{Ei}) \times \left( c_j(t) - \mu_{cj} \right) \right\},$$

où Corr(i,j) est la corrélation, $E_i(t)$ est le $i^{ème}$ d'un ou plusieurs signaux de mesure de lumière en fonction du temps, $c_j(t)$ est une variable d'état exprimant l'état de fonctionnement du $j^{ème}$ signal de mesure de lumière en fonction du temps, $\mu_{Ei}$ est une moyenne temporelle du signal de mesure de lumière, $E_i(t)$, est une moyenne temporelle de la variable d'état, cj(t), K(i,j) est un facteur qui peut être une constante ou dépendre de $E_i(t)$ et $c_j(t)$ et { } signifie la moyenne dans le temps.

9. Système de gestion selon une quelconque des revendications 1 à 8, dans lequel le système de gestion comprend de nombreux capteurs de lumière et le système de traitement de données est configuré pour :

   - former des indicateurs de différence, chacun étant compris entre deux des signaux de mesure de lumière et indiquant une différence entre les comportements temporels des deux signaux de mesure de lumière,
   - classer, sur la base des indicateurs de différence, les signaux de mesure de lumière en groupes où, dans chaque groupe, les signaux de mesure de lumière sont semblables les uns aux autres et
   - former le ou les indicateurs de dépendance en utilisant uniquement un signal de mesure de lumière de chaque groupe.

10. Système de gestion selon la revendication 9, dans lequel le système de traitement de données est configuré pour calculer chacun des indicateurs de différence selon l'équation suivante :

$$D(i,j) = \{E_i(t)^2\} - \{E_i(t) \times E_j(t)\}^2 / \{E_j(t)^2\},$$

où $D(i,j)$ est l'indicateur de différence entre les $i^{ème}$ et $j^{ème}$ signaux de mesure de lumière, $E_i(t)$ et $E_j(t)$ sont les $i^{ème}$ et $j^{ème}$ signaux de mesure de lumière en fonction du temps, et { } signifie la moyenne dans le temps.

11. Système de gestion selon une quelconque des revendications 1 à 10, dans lequel le système de traitement de données est un dispositif de traitement (110, 210) comprenant :

   - un récepteur (RX) configuré pour recevoir le ou les signaux de mesure de lumière des signaux de mesure provenant d'un ou plusieurs capteurs de lumière et d'un ou plusieurs signaux de commande d'éclairage provenant du système de commande d'éclairage, le ou les signaux de commande d'éclairage définissant le ou les états opérationnels du ou des luminaires et
   - un émetteur (TX) configuré pour transmettre le ou les paramètres de commande au système de commande d'éclairage.

12. Système de gestion selon une quelconque des revendications 1 à 11, dans lequel le système de commande d'éclairage est un dispositif de commande (109) comprenant :

   - un émetteur (TX) configuré pour transmettre un ou plusieurs signaux de commande d'éclairage au système de traitement de données et au ou aux luminaires, le ou les signaux de commande d'éclairage définissant le ou les états opérationnels du ou des luminaires et
   - un récepteur (RX) configuré pour recevoir le ou les paramètres de commande du système de traitement de données.

13. Système d'éclairage comprenant :

   - un ou plusieurs luminaires (101-104, 201-204, 301-304), et
   - un système de gestion selon une quelconque des revendications 1 à 12 et configuré pour commander le ou les luminaires.

14. Procédé de commande d'un ou plusieurs luminaires, le procédé comprenant :

   - la production (401) d'un ou plusieurs signaux de mesure de lumière indiquant la lumière tombant sur un ou plusieurs capteurs de lumière et
   - la commande (402) du ou des luminaires conformément à un ou plusieurs paramètres de commande,

   **caractérisé en ce que** le procédé comprend :

   - la formation (403) d'un ou plusieurs indicateurs de dépendance exprimant la dépendance du ou des signaux de mesure de lumière sur un ou plusieurs états de fonctionnement du ou des luminaires, et
   - le réglage (404) du ou des paramètres de commande sur la base d'au moins le ou les indicateurs de dépendance.

**15.** Programme de traitement de données pour commander un ou plusieurs luminaires, le programme de traitement de données comprenant des instructions exécutables de processeur de données pour commander un système de traitement de données programmable pour :

- recevoir un ou plusieurs signaux de mesure de lumière indiquant la lumière tombant sur un ou plusieurs capteurs de lumière et des informations indiquant un état de fonctionnement de chacun des un ou plusieurs luminaires,

**caractérisé en ce que** le programme de traitement de données comprend des instructions exécutables de processeur de données pour commander le système de traitement de données programmable pour :

- former un ou plusieurs indicateurs de dépendance exprimant la dépendance du ou des signaux de mesure de lumière sur le ou les états de fonctionnement du ou des luminaires, et
- définir, sur la base d'au moins le ou les indicateurs de dépendance, un ou plusieurs paramètres de commande d'un système de commande d'éclairage configuré pour commander le ou les luminaires conformément au ou aux paramètres de commande.

**Figure 1**

**Figure 2**

**Figure 3**

START

Produce one or more light measurement signals indicative of light falling on one or more light sensors.

401

Control one or more luminaires in accordance with one or more control parameters.

402

Form one or more dependency indicators expressing dependence of the one or more light measurement signals on one or more operational statuses of the one or more luminaires.

403

Set the one or more control parameters based on at least the one or more dependency indicators.

404

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3799533 A
- KR 20150066220
- WO 2018050570 A
- EP 3846591 A
- EP 3908083 A